# EUROPÄISCHE PATENTSCHRIFT

(11) **EP 4 230 862 B1**
(45) Veröffentlichungstag und Bekanntmachung des Hinweises auf die Patenterteilung: **04.09.2024**
(21) Anmeldenummer: 23153456.1
(22) Anmeldetag: 26.01.2023
(51) Int. Cl.: F03D 1/06

(54) **ROTORBLATT EINER WINDENERGIEANLAGE**
ROTOR BLADE OF A WIND TURBINE
PALE DE ROTOR D'UNE ÉOLIENNE

(30) Priorität: 21.02.2022 DE 102022104017
(43) Veröffentlichungstag der Anmeldung: 23.08.2023
(73) Patentinhaber: Wobben Properties GmbH, 26607 Aurich (DE)
(72) Erfinder: Möller, Christian, 26603 Aurich (DE); Stemberg, Jochen, 26607 Aurich (DE); Messing, Ralf, 26605 Aurich (DE)
(74) Vertreter: Eisenführ Speiser

(56) Entgegenhaltungen:
- EP-A1- 2 253 838
- DE-A1- 102018 121 190
- DE-A1- 2 921 152
- US-A1- 2012 321 482

## Beschreibung

Die vorliegende Erfindung betrifft ein Rotorblatt einer Windenergieanlage sowie eine, ein solches Rotorblatt aufweisende Windenergieanlage.

Windenergieanlagen sind allgemein bekannt und üblicherweise als Auftriebsläufer mit horizontaler Achse und drei Rotorblättern auf der Luvseite ausgeführt.

Die Länge und die Form der Rotorblätter sind dabei - neben den vorherrschenden Windverhältnissen am Standort der Windenergieanlage - maßgeblich für den Ertrag einer Windenergieanlage. Insbesondere kann mit zunehmender Länge der Rotorblätter der Ertrag der Windenergieanlage gesteigert werden.

Insoweit sind lange Rotorblätter wünschenswert.

Mit zunehmender Länge der Rotorblätter erhöhen sich aber auch die konstruktiven Anforderungen, bspw. an das Gewicht oder das Strömungsverhalten.

Hinzu kommt, dass für den Transport zum Standort der Windenergieanlage logistische Anforderungen berücksichtigt werden müssen, was bspw. dazu führt, dass Rotorblätter mit einer Länge von über 70 Metern häufig mehrteilig ausgeführt werden. Dies bedeutet insbesondere, dass die Rotorblätter ab Werk mehrteilig ausgeführt sind und erst am Standort der Windenergieanlage zusammengesetzt werden.

Das Zusammensetzen erfolgt dabei beispielsweise mittels Bolzen, die eine Materialaufdickung an der entsprechenden Stelle (Trennstelle) benötigen, was zu einer Profilverschiebung führen kann, die sich ungünstig auf das Strömungsverhalten des Rotorblattes auswirken kann.

Insoweit sind für geteilte Rotorblätter gesonderte Profile notwendig.

Ein Rottorblatt gemäß dem Stand der Technik ist z.B. in DE 2921152 A1 beschrieben.

Aufgabe der Offenbarung ist es wenigstens eines der oben genannten Probleme zu adressieren, insbesondere soll ein geteiltes Rotorblatt bereitgestellt werden, welches den aerodynamischen Anforderungen an lange Rotorblätter gerecht wird.

In einem Aspekt wird somit ein Rotorblatt einer Windenergieanlage vorgeschlagen, wenigstens umfassend eine erste Rotorblattkomponente mit einem ersten Ende zum Anordnen an der Windenergieanlage, und einem zweiten Ende zum Verbinden mit einer zweiten Rotorblattkomponente; eine zweite Rotorblattkomponente mit einem ersten Ende zum Anordnen an der ersten Rotorblattkomponente, und einem zweiten Ende, wobei die erste Rotorblattkomponente mit der zweiten Rotorblattkomponente an einer Trennstelle zu dem Rotorblatt verbindbar ist, wobei das Rotorblatt an der Trennstelle ein aerodynamisch offenes Profil aufweist.

Die Trennstelle trennt das Rotorblatt vorzugsweise in Rotorblattlängsrichtung, so dass die erste Rotorblattkomponente auch als Wurzelkomponente und die zweite Rotorblattkomponente auch als Blattspitzenkomponente bezeichnet werden kann. Unabhängig davon kann sowohl die Rotorblattkomponente als auch die Blattspitzenkomponente in einigen Ausführungen selbst aus mehreren Einzelteilen bestehen, beispielsweise selbst auch eine oder mehrere Trennstellen aufweisen.

Es wird also ein zumindest zweiteiliges Rotorblatt einer Windenergieanlage vorgeschlagen, welches wenigstens an einer Trennstelle, insbesondere zwischen der ersten Rotorblattkomponente und der zweiten Rotorblattkomponente, ein aerodynamisch offenes Profil aufweist.

Ein aerodynamisch offenes Profil kann beispielsweise dadurch erreicht werden, dass die Oberseite bzw. Saugseite des Rotorblattes und die Unterseite bzw. Druckseite des Rotorblattes an der Hinterkante des Rotorblattes voneinander beabstandet sind. Insbesondere ist ein aerodynamisch offenes Profil von einem aerodynamisch geschlossenen Profil zu unterscheiden, bei dem ein Abströmpunkt auf der Druckseite dem Abströmpunkt auf der Saugseite entspricht.

Unter einem aerodynamisch offenen Profil wird hierin demnach ein aerodynamisches Profil verstanden, bei dem eine Strömung an einer Vorderkante in eine Strömung über die Saugseite und eine Strömung über die Druckseite aufgeteilt wird und diese aufgeteilte Strömung an zwei voneinander beabstandeten Punkten auf der Saugseite und der Druckseite abströmt.

Eine Möglichkeit der Realisierung eines aerodynamisch offenen Profils stellt eine sogenannte "stumpfe" oder "dicke" Hinterkante dar, bei der die Hinterkante eine endliche Ausdehnung zwischen einer druckseitigen Hinterkante und einer saugseitigen Hinterkante aufweist. Andere Möglichkeiten sind beispielsweise das Vorsehen von strömungsbeeinflussenden Anbauteilen wie Gurney-Flaps, wobei ein Abströmpunkt üblicherweise auf der Druckseite die Spitze der Gurney-Flap ist. Auch sind C-förmige bzw. hohle Profile möglich.

Das Rotorblatt kann also neben der ersten Rotorblattkomponente und der zweiten Rotorblattkomponente auch noch weitere Segmente oder Bauteile aufweisen, wie bspw. ein, insbesondere zusätzliches, Hinterkantensegment. Die wesentliche Form und Erscheinung des Rotorblattes wird aber durch die erste und zweite Rotorblattkomponente bestimmt, die bevorzugt der Länge nach zu dem eigentlichen Rotorblatt, insbesondere formschlüssig, verbunden werden.

Die auch als nabennahe Komponente bezeichnete erste Rotorblattkomponente weist bevorzugt ein erstes Ende auf, welches dazu eingerichtet ist, mit der Windenergieanlage, insbesondere einer (Rotor-)Nabe der Windenergieanlage, verbunden zu werden. Das erste Ende ist hierfür bevorzugt als Blattflansch oder Blattwurzel ausgebildet.

Die erste Rotorblattkomponente weist zudem ein zweites Ende auf, welches dazu eingerichtet ist, mit der zweiten Rotorblattkomponente, insbesondere einem ersten Ende der zweiten Rotorblattkomponente, verbunden zu werden, bspw. durch Bolzen oder Verkleben oder Gelege.

Die auch als nabenferne Komponente bezeichnete zweite Rotorblattkomponente weist bevorzugt ein erstes Ende auf, welches dazu eingerichtet ist, mit der ersten Rotorblattkomponente, insbesondere einem zweiten Ende der ersten Rotorblattkomponente, verbunden zu werden, bspw. durch Bolzen oder Verkleben oder Gelege.

Die zweite Rotorblattkomponente weist zudem ein zweites Ende auf, welches im Wesentlichen zulaufend, bevorzugt spitz zulaufend, ausgeführt ist und/oder als Spitze (engl.: tip) des Rotorblattes ausgebildet ist.

Das Rotorblatt weist zudem eine Trennstelle auf, die bevorzugt im Wesentlichen quer zur Längsrichtung des Rotorblattes verläuft.

Die Rotorblattkomponenten sind an eben jener Trennstelle miteinander verbunden, insbesondere so, dass die Summe der Längen der Rotorblattkomponenten im Wesentlichen die Länge des Rotorblattes ergibt.

Bevorzugt weist die Trennstelle zudem eine Materialverdickung, eine sogenannte Preformaufdickung auf. Dies kann bspw. dadurch erreicht werden, dass das zweite Ende der ersten Rotorblattkomponente und das erste Ende der zweiten Rotorblattkomponente mit Material aufgedickt werden, bspw. durch zusätzliche Lagen an glasfaserverstärktem Kunststoff (GFK) und/oder kohlenstofffaserverstärktem Kunststoff (CFK) oder dergleichen.

Vorzugsweise weist das Rotorblatt in Rotorblattlängsrichtung einen Verlauf unterschiedlicher Profile mit jeweils einer Vorderkante, einer Hinterkante und die Vorder- und Hinterkante verbindenden druckseitigen und saugseitigen Strömungsflächen auf, wobei die Hinterkante in wenigstens einem Abschnitt in Rotorblattlängsrichtung, in dem die Trennstelle liegt, als dicke Hinterkante ausgeführt ist und damit das aerodynamisch offene Profil ausbildet.

Bei dicken Hinterkanten kann eine Richtung der Dicke der Hinterkante im Wesentlichen parallel zu der Rotorblattdicke und orthogonal zu der Rotorblattlänge und orthogonal zu der Rotorblatttiefe ausgerichtet sein. Eine Dicke der Hinterkante des Rotorblattes kann jedoch auch für solche Profile definiert werden, die abgerundete Ecken oder auch strukturell geschlossene Profile, insbesondere in Tropfenform, aufweisen.

Hierbei bildet in dem Profilverlauf des Rotorblattes die jeweils druckseitige bzw. saugseitige Hinterkantenkontur vorzugsweise jeweils eine Abströmkante. Als Dicke der Hinterkante wird bei solchen Profilen insbesondere im Profilschnitt der Abstand des saugseitigen Abströmpunktes und des druckseitigen Abströmpunktes verstanden. Anders ausgedrückt verbinden die Abströmkanten im Profilverlauf die jeweiligen Abströmpunkte der zugehörigen Profilschnitte. Um die Dicke der Hinterkante zu definieren wird der jeweilige Abströmpunkt insbesondere als lokales Krümmungsmaximum sowohl auf der Druckseite als auch auf der Saugseite definiert. Üblicherweise können sowohl druckseitig als auch saugseitig mehr als ein lokales Krümmungsmaximum auftreten, wobei in diesem Fall der jeweilige Abströmpunkt das von der Vorderkante am weitesten entfernte lokale Krümmungsmaximum ist.

Die Hinterkante kann dabei integraler Bestandteil der ersten und/oder der zweiten Rotorblattkomponente sein, oder ein ein- oder mehrteiliges Bauteil sein, welches an der ersten und/oder der zweiten Rotorblattkomponente, bspw. durch Bolzen oder Verkleben, befestigt ist oder wird.

Vorzugsweise ist die dicke Hinterkante durch an der Hinterkante beabstandete druckseitige und saugseitige Strömungsflächen, d.h. jeweils beabstandete Abströmpunkte, ausgebildet, wobei der Abstand zwischen druckseitiger und saugseitiger Strömungsfläche an der Hinterkante als Dicke der Hinterkante bezeichnet wird.

Vorzugsweise weist ein Verlauf der Dicke der Hinterkante wenigstens ein Maximum auf und die Dicke der Hinterkante beträgt im Bereich der Trennstelle besonders bevorzugt wenigstens 50 Prozent, bevorzugt 60 Prozent, weiter bevorzugt 80 Prozent, dieses Maximums.

Alternativ oder zusätzlich liegt das Maximum in einem Bereich um die Trennstelle, wobei der Bereich um die Trennstelle zwischen 15 Prozent und 40 Prozent der Länge des Rotorblattes liegt und/oder der Bereich kleiner als 10 Prozent der Länge des Rotorblattes ist.

Die Dicke der Hinterkante ist ein absoluter Wert, der unabhängig von anderen geometrischen Parametern des Rotorblattes einen einfach zu bestimmenden Verlauf über die Länge des Rotorblattes annimmt. Indem das Maximum der Dicke der Hinterkante in einem bestimmten Bereich aufweist, nämlich in Bezug auf die Position der Trennstelle, ergibt sich ein besonders vorteilhaftes Rotorblatt.

Hierbei kann sowohl die Dicke der Hinterkante an der Trennstelle einen bestimmten Mindestwert, bezogen auf die maximale Dicke der Hinterkante, aufweisen, und/oder die Position des Maximums nicht über einen bestimmten Betrag von der Trennstelle entfernt liegen. In beiden alternativen bzw. sich ergänzenden Beschreibungen besteht also ein Zusammenhang zwischen der Position der Trennstelle und der Dicke der Hinterkante.

Wenn in einem Blattentwurf beispielsweise ein Maximum der Dicke der Hinterkante weiter in Richtung der Rotorblattspitze wandert, so hat es sich als vorteilhaft herausgestellt, auch die Trennstelle entsprechend weiter in Richtung der Rotorblattspitze zu legen. Anders herum hat sich herausgestellt, dass es vorteilhaft ist, den Verlauf der Dicke der Hinterkante an die Position einer festgelegten Trennstelle anzupassen.

Während in dieser Ausführung der absolute Wert der Dicke der Hinterkante herangezogen wird, so lassen sich in anderen Ausführungen vergleichbare Zusammenhänge auch mit auf die Rotorblattdicke bzw. die Rotorblatttiefe bezogene Dicken der Hinterkante, also relative Hinterkantendicken bezogen auf Rotorblattdicke und/oder bezogen auf Rotorblatttiefe, heranziehen. Auch hier hat sich gezeigt, dass es vorteilhaft ist, wenn sich ein entsprechendes lokales Maximum des Verlaufs der relativen Dicke der Hinterkante ausbildet, an dessen Position sich die Position der Trennstelle orientiert.

In einer Ausführung liegt die Trennstelle näher an einer Rotorblattspitze des Rotorblattes als das Maximum der Dicke der Hinterkante.

Damit ist zunächst vorteilhaft, dass die Hinterkante im Bereich der Trennstelle in Rotorblattlängsrichtung konvergiert, also die druckseitige Hinterkante und die saugseitige Hinterkante aufeinander zulaufen. Zudem ist vorteilhaft, dass die Position der Trennstelle, in Rotorblattlängsrichtung, nicht vor sondern hinter dem Maximum liegt. Die zusätzlichen strukturellen Anforderungen und damit bspw. Gewichtserhöhungen an der Trennstelle resultieren in zusätzlichen strukturellen Lasten durch die Trennstelle, deren Auswirkungen durch die Anordnung hinter dem Maximum, also näher an der Rotorblattspitze, zumindest verringert werden können.

In anderen Ausführungen hat es sich als vorteilhaft herausgestellt, bereits in Umgebung der Rotorblattnabe eine dicke Hinterkante vorzusehen. Anstelle des Verlaufs mit Maximum der Dicke der Hinterkante im Bereich der Trennstelle, kann dann das Maximum der Dicke der Hinterkante bereits an der Blattwurzel anliegen.

Vorzugsweise ist der Verlauf der Dicke der Hinterkante in dieser Ausführung monoton fallend, nimmt also monoton mit steigendem Abstand von der Rotorblattwurzel ab. Das Maximum der Dicke der Hinterkante ist also an bzw. in Umgebund der Rotorblattwurzel ausgebildet.

Besonders bevorzugt wird in dieser Ausführung ein besonderer Verlauf der Änderung der Dicke der Hinterkante vorgesehen. Die Änderung der Dicke der Hinterkante kann besonders bevorzugt als Ableitung der Dicke der Hinterkante in Rotorblattlängs- oder auch Radius-richtung ausgedrückt werden. Ein monoton fallender Verlauf der Dicke der Hinterkante hat demnach eine über den gesamten Rotorradius negative bzw. jedenfalls nicht positive Ableitung, also eine "negative" Änderung.

Insbesondere ab einem bestimmten Bereich in Rotorblattlängsrichtung, ab dem die Hinterkante keine endliche Ausdehnung oder Dicke mehr zeigt, wird auch keine weitere Änderung der Dicke der Hinterkante auftreten.

Besonders bevorzugt liegt ein lokales Maximum der Änderung der Dicke der Hinterkante an der Trennstelle oder in einem Bereich um die Trennstelle, wobei der Bereich um die Trennstelle zwischen 15 Prozent und 40 Prozent der Länge des Rotorblattes liegt und/oder der Bereich kleiner als 10 Prozent der Länge des Rotorblattes ist.

In einer Alternative ist daher die absolute Lage des Bereichs bezogen auf das Rotorblatt formuliert. In der anderen Alternative ist die Ausdehnung des Bereichs bezogen auf die Trennstelle formuliert.

Dass das lokale Maximum innerhalb des Bereichs liegt bedeutet hierbei vorzugsweise, dass bereits innerhalb des Bereichs beiderseitig des lokalen Maximums eine betragsmäßig größere Änderung der Dicke der Hinterkante vorliegt. Anders ausgedrückt bei dem lokalen Maximum handelt es sich insbesondere nicht um einen Wert am Rand des Bereichs.

Besonders bevorzugt befindet sich das lokale Maximum der Änderung der Dicke in einem Bereich kleiner als 5 Prozent der Länge des Rotorblattes um die Trennstelle.

In einer Ausführung verläuft die Druckseite, an der Trennstelle im Bereich der Hinterkante, konkav.

Ein konkaver Verlauf der Druckseite bedeutet, dass die Druckseite im Bereich der Hinterkante nach innen, also in Richtung der Saugseite, gekrümmt verläuft.

In einer Ausführung ist eine Krümmung der Druckseite an der Trennstelle im Bereich der Hinterkante betragsmäßig größer als die Krümmung der Saugseite an der Trennstelle im Bereich der Hinterkante.

Damit kann das Profil an der Trennstelle an der Hinterkante als divergierend bezeichnet werden. Vorteilhaft divergieren zwei Tangenten, die jeweils an den saugseitigen Abströmpunkt und den druckseitigen Abströmpunkt angelegt werden, hinter der Hinterkante.

Erfindungsgemäß wird eine direkte Verbindung zwischen Vorderkante und Hinterkante als Profilsehne und deren Länge als Profiltiefe bezeichnet, ein größter Abstand zwischen druckseitiger und saugseitiger Profilfläche senkrecht auf der Profiltiefe wird als Profildicke bezeichnet und ein Verhältnis aus Profildicke zu Profiltiefe wird als relative Dicke bezeichnet, wobei ein Verlauf der relativen Dicke über die Rotorblattlänge als Dickenverlauf bezeichnet wird.

Erfindungsgemäß weist eine Änderung des Dickenverlaufs im Bereich der Trennstelle ein lokales Maximum auf.

In dieser Ausführung wird als der Bereich der Trennstelle vorzugsweise ein Bereich von 5% der Rotorblattlänge, auch als "5%*L*" bezeichnet, verstanden, in dessen Mitte sich die Trennstelle befindet. Indem die Änderung des Dickenverlaufs ein lokales Maximum im Bereich der Trennstelle aufweist, wird nach der Trennstelle, das heißt, von der Trennstelle aus betrachtet in Richtung Rotorblattspitze, eine zügige Reduktion der relativen Dicke erfolgen. Damit können die strukturell bedingten und aerodynamisch unvorteilhaften Verstärkungen an der Trennstelle möglichst rasch kompensiert werden, was zu einem effizienteren Rotorblatt führt.

Diese bevorzugte Beschreibung des Bereichs der Trennstelle ist ebenso auf die Ausführungen zur Dicke der Hinterkante bzw. die Änderung der Dicke der Hinterkante anwendbar. Besonders bevorzugt weist der Dickenverlauf genau an der Trennstelle ein Plateau auf, die Änderung des Dickenverlaufs also genau an der Trennstelle ein Minimum. Dies ist der Fall, da der absolute Dickenverlauf durch Aufdickung oder ähnliches an der Trennstelle ein Maximum aufweist, um beispielsweise die Befestigungsbolzen zum Befestigen der Rotorblattkomplenten aufzunehmen.

In einer Ausführung ist die Änderung des Dickenverlaufs als Ableitung des Dickenverlaufs nach der Richtung der Rotorblattlänge definiert.

In einer Ausführung ändert eine Krümmung des Dickenverlaufs im Bereich der Trennstelle die Richtung, wobei die Krümmung insbesondere als zweite Ableitung des Dickenverlaufs nach der Richtung der Rotorblattlänge definiert ist und sich die Richtung bei einem Vorzeichenwechsel ändert.

In einer Ausführung ist die Änderung des Dickenverlaufs um die Trennstelle unsymmetrisch ausgeführt. Das bedeutet, dass die Änderung des Dickenverlaufs vor der Trennstelle an wenigstens einer Stelle größer oder kleiner als an einer entsprechenden Position hinter der Trennstelle ausgeführt ist. Hier und im Folgenden wird unter der Bezeichnung "vor der Trennstelle" der Teil des Rotorblattes von der Rotorblattnabe bis zur Trennstelle und "hinter der Trennstelle" der Teil des Rotorblattes ab der Trennstelle bis zur Rotorblattspitze verstanden.

Besonders bevorzugt weist das Rotorblatt in einem gesamten Bereich von 5% nabennäher der Trennstelle eine geringere oder gleiche Abnahme des Dickenverlaufs als symmetrisch in dem Bereich von 5% nabenferner der Trennstelle auf, wobei besonders bevorzugt an einer Position 5% nabennäher der Trennstelle eine geringere Abnahme des Dickenverlaufs als an einer Position 5% nabenferner der Trennstelle ausgebildet ist.

Die in dieser Ausführung stärkere Abnahme hinter der Trennstelle ermöglicht es, rasch hinter der Trennstelle zu aerodynamisch vorteilhaften dünnen Profilen zu gelangen.

Vorzugsweise beträgt die relative Dicke an der Trennstelle zwischen 40% und 80%.

Eine relative Position der maximalen Profildicke, bezogen auf die Profilsehne, wird als Dickenrücklage bezeichnet. In einer Ausführung beträgt die Dickenrücklage an der Trennstelle kleiner als 30%. Damit ist die maximale Profildicke signifikant vor dem Mittelpunkt der Profiltiefe in Richtung der Vorderkante, was zu einem aerodynamisch vorteilhaften Rotorblatt beiträgt.

Eine Verbindung der Innenkreise des Profils wird als Skelettlinie bezeichnet. Eine Wölbung wird als Abstand der Skelettlinie von der und senkrecht zu der Profilsehne definiert. In einer Ausführung weist ein Verlauf der Wölbung entlang der Profiltiefe ein Maximum in den hinteren 50%, gemessen ab der Vorderkante, auf.

Der Begriff "Maximum" impliziert nicht, dass die Wölbung in irgendeinem einem Bereich positiv ausgeführt sein muss. Falls die Wölbung über die gesamte Profiltiefe negativ verläuft, ist das Maximum der Wölbung entsprechend ein betragsmäßiges Minimum.

Vorzugsweise ändert sich ein Vorzeichen der Wölbung in den vorderen 70% der Profiltiefe, gemessen ab der Vorderkante, insbesondere in einem Bereich zwischen 40% und 70% der Profiltiefe.

Das Vorzeichen der Wölbung kann anders ausgedrückt auch als eine Position des Zentrums der Innkreise bezüglich der Profilsehne bezeichnet werden. Ein positives Vorzeichen wird vorzugsweise bei einer Wölbung in Richtung der Saugseite, ein negatives Vorzeichen bei einer Wölbung in Richtung der Druckseite festgelegt.

Vorzugsweise beträgt ein Wert der Wölbung an der Trennstelle an jeder Position in Profiltiefenrichtung zwischen plus und minus 10%, insbesondere zwischen plus und minus 7%, bezogen auf die Profiltiefe an der Trennstelle.

Besondere Vorteile ergibt sich eine Kombination dieser Wölbungsverteilung mit der oben beschriebenen Dickenrücklage an der Trennstelle.

Vorzugsweise weist das Rotorblatt eine Länge von wenigstens 70m, bevorzugt wenigstens 80m, weiter bevorzugt wenigstens 100m, auf.

Vorzugsweise beträgt die maximale Profiltiefe des Rotorblattes höchstens 6,5% der Länge des Rotorblattes.

Die Profiltiefe wird insbesondere als Tiefe der profilgebenden Kontur ohne Anbauteile bestimmt. Die Einhaltung dieser Obergrenze für die maximale Profiltiefe ermöglicht, dass Blattmasse, strukturelle Komplexitäten und Transportmaße eingehalten werden. Beispielsweise kann auch bei einem Rotorblatt von 95 m Rotorblattlänge die Profiltiefe deutlich unterhalb der Grenze von 6,5% und beispielsweise bei höchstens 4,10 m liegen, um Transportbeschränkungen zu vermeiden.

Vorzugsweise weist das Rotorblatt wenigstens einen Vortex-Generator und/oder eine Gurney-Flap und/oder eine Splitter-Platte und/oder einen Grenzschichtzaun und/oder Serrations auf, insbesondere am oder auf dem ersten und zweiten länglichen Körper.

Durch diese oder andere bevorzugte Anbauteile, entweder einzeln oder in Kombination, können die positiven Eigenschaften des erfindungsgemäßen Rotorblattes weiter verbessert werden.

Vorzugsweise weist die erste Rotorblattkomponente eine Länge auf und die zweite Rotorblattkomponente weist eine Länge auf, wobei die Länge der ersten Rotorblattkomponente kürzer ist als die Länge der zweiten Rotorblattkomponente, insbesondere so, dass die Trennstelle in einem Bereich des Rotorblattes zwischen 20 Prozent und 35 Prozent der Länge des Rotorblattes angeordnet ist.

In einem weiteren Aspekt wird eine Windenergieanlage mit wenigstens einem Rotorblatt gemäß dem vorbeschriebenen Aspekt vorgeschlagen.

Schließlich wird in einem weiteren Aspekt auch ein Windpark mit mehreren Windenergieanlagen gemäß dem vorbeschriebenen Aspekt vorgeschlagen.

Sowohl die Windenergieanlage als auch der Windpark ermöglichen die gleichen Vorteile, insbesondere bei entsprechend großer Dimensionierung, zu erreichen, wie sie für das Rotorblatt gemäß der Offenbarung beschrieben sind. Zudem ergeben sich besondere Vorteile durch Kombination mit einer oder mehrerer der als bevorzugt beschriebenen Ausführungsformen.

Die vorliegende Offenbarung wird nun nachfolgend anhand der begleitenden Figuren näher erläutert, wobei für gleiche oder ähnliche Baugruppen dieselben Bezugszeichen verwendet werden.
- Fig. 1: zeigt schematisch und exemplarisch eine perspektivische Ansicht einer Windenergieanlage.
- Fig. 2: zeigt schematisch und exemplarisch ein Rotorblatt einer Windenergieanlage, insbesondere in drei Ansichten.
- Fig. 3: zeigt schematisch und exemplarisch ein Profil eines Rotorblattes einer Windenergieanlage an einer Trennstelle des Rotorblattes, insbesondere in einem Querschnitt.
- Fig. 4: zeigt schematisch und exemplarisch einen Verlauf eines Teils eines Profils eines Rotorblattes einer Windenergieanlage entlang einer Länge des Rotorblattes.
- Fig. 5: zeigt schematisch und exemplarisch einen Verlauf einer Dicke der Hinterkante und einer zugehörigen Hinterkante entlang einer Länge des Rotorblattes.

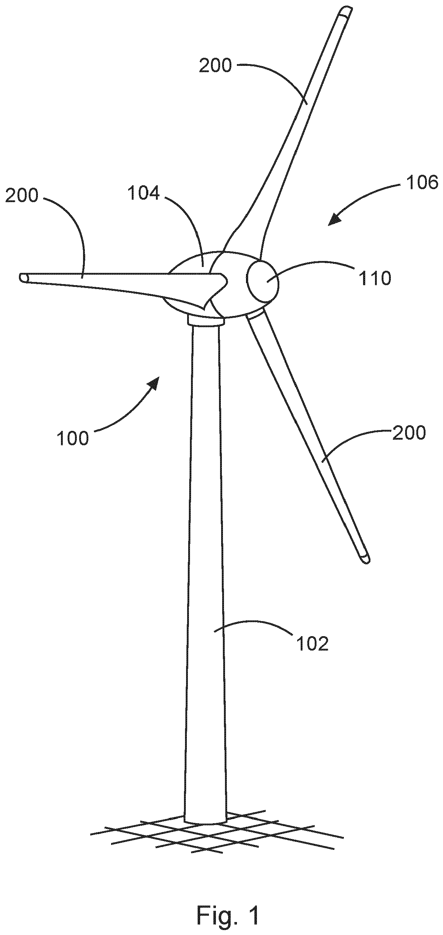

Fig. 1 zeigt schematisch und exemplarisch eine perspektivische Ansicht einer Windenergieanlage 100. Die Windenergieanlage 100 ist als Auftriebsläufer mit horizontaler Achse und drei Rotorblättern 200 auf der Luvseite, insbesondere als Horizontalläufer, ausgebildet. Die Windenergieanlage 100 weist einen Turm 102 und eine Gondel 104 auf.

An der Gondel 104 ist ein aerodynamischer Rotor 106 mit einer Nabe 110 angeordnet. An der Nabe 110 sind drei Rotorblätter 200, insbesondere symmetrisch zur Nabe 110, angeordnet, bevorzugt um 120° versetzt. Die Rotorblätter 200 sind bevorzugt wie vorstehend und/oder nachstehend beschrieben ausgeführt.

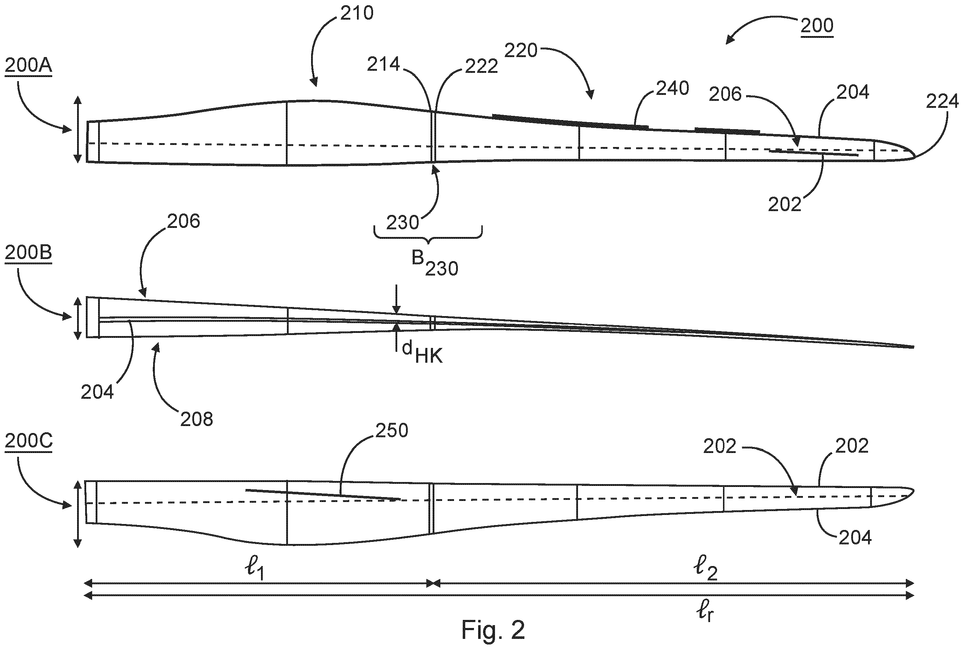

Fig. 2 zeigt schematisch und exemplarisch ein Rotorblatt 200 einer Windenergieanlage, wie bspw. in Fig. 1 gezeigt, in drei Ansichten 200A, 200B, 200C.

Das Rotorblatt 200 weist eine Vorderkante 202, eine Hinterkante 204, eine Saugseite 206, eine Druckseite 208 und eine Länge Ir auf. In der ersten Ansicht 200A ist das Rotorblatt 200 dabei von oben gezeigt, also mit Blick auf die Saugseite 206.

In der zweiten Ansicht 200B ist das Rotorblatt 200 von hinten gezeigt, also mit Blick auf die Hinterkante 204.

In der dritten Ansicht 200C ist das Rotorblatt 200 von unten gezeigt, also mit Blick auf die Druckseite 208.

Das Rotorblatt 200 ist als zweiteiliges Rotorblatt 200 ausgeführt, nämlich aus einer ersten Rotorblattkomponente 210 und einer zweiten Rotorblattkomponente 220, die an einer Trennstelle 230 zu dem eigentlichen Rotorblatt 200 zusammenfügbar sind. Hierfür sind bspw. funktionale oder konstruktive Maßnahmen erforderlich, die von der Trennstelle aus in die Rotorblattkomponenten 210, 220 hineinreichen, insbesondere in einen Bereich B₂₃₀ um die Trennstelle.

Das Rotorblatt 200 wird typischerweise aus Transportgründen in einzelne Rotorblattkomponenten 210, 220 aufgeteilt an den Errichtungsort der Windenergieanlage 100 transportiert und vor Ort zusammengefügt. Dafür sind an der Trennstelle 230 strukturelle Vorkehrungen zu treffen, beispielsweise dickere Materialschichten, um eine zuverlässige Verbindung beispielsweise durch Bolzen oder durch Verkleben an der Baustelle zu gewährleisten.

Es ist demnach üblicherweise unvermeidbar, dass im Bereich der Trennstelle 230, also in dem Bereich B₂₃₀ ein höheres Gewicht und gegebenenfalls sogar weitere unerwünschte , beispielsweise aerodynamische, Effekte, wie beispielsweise unvorteilhafte Induktionsfaktoren oder Elastizitäten, auftreten. Die vorliegende Offenbarung erkennt diese Nachteile der Verwendung von geteilten Rotorblättern und schafft es, unter diesen als gegeben angenommenen Randbedingungen ein möglichst effizientes Rotorblatt zu schaffen.

Die erste Rotorblattkomponente 210 und die zweite Rotorblattkomponente 220 sind insbesondere der Länge nach miteinander verbunden, also so, dass das Rotorblatt 200 eine Länge Iᵣ aufweist, die sich im Wesentlichen aus der Länge I₁ der ersten Rotorblattkomponente 210 und der Länge I₂ der zweiten Rotorblattkomponente 220 zusammensetzt.

Die erste Rotorblattkomponente 210 umfasst ein erstes Ende 212 zum Anordnen an einem Blattanschluss der Windenergieanlage 100 und ein zweites Ende 214, welches insbesondere mit dem ersten Ende 222 der zweiten Rotorblattkomponente 220 verbunden wird. Die erste Rotorblattkomponente 210 kann auch als nabennahe Rotorblattkomponente bezeichnet werden.

Die zweite Rotorblattkomponente 220 umfasst ein erstes Ende 222, welches mit dem zweiten Ende 214 der ersten Rotorblattkomponente 214 verbunden wird und ein zweites Ende 224, welches auch als Rotorblattspitze bezeichnet werden kann.

Bevorzugt ist die zweite Rotorblattkomponente 220 deutlich länger ausgeführt als die erste Rotorblattkomponente 210, insbesondere so, dass die Trennstelle in einem Bereich zwischen 15 Prozent und 40 Prozent der Länge Iᵣ des Rotorblattes 200 liegt.

Ferner weist das Rotorblatt optional Serrations 240 an der Hinterkante 206, insbesondere an der zweiten Rotorblattkomponente 220, sowie auf der Druckseite 208 eine Gurney-Flap 250 auf. Die Gurney-Flap 250 erstreckt sich besonders bevorzugt sowohl über einen Teil der ersten Rotorblattkomponente 210 als auch über einen Teil der zweiten Rotorblattkomponente 220 und ist demnach insbesondere in dem Bereich der Trennstelle 230 angeordnet.

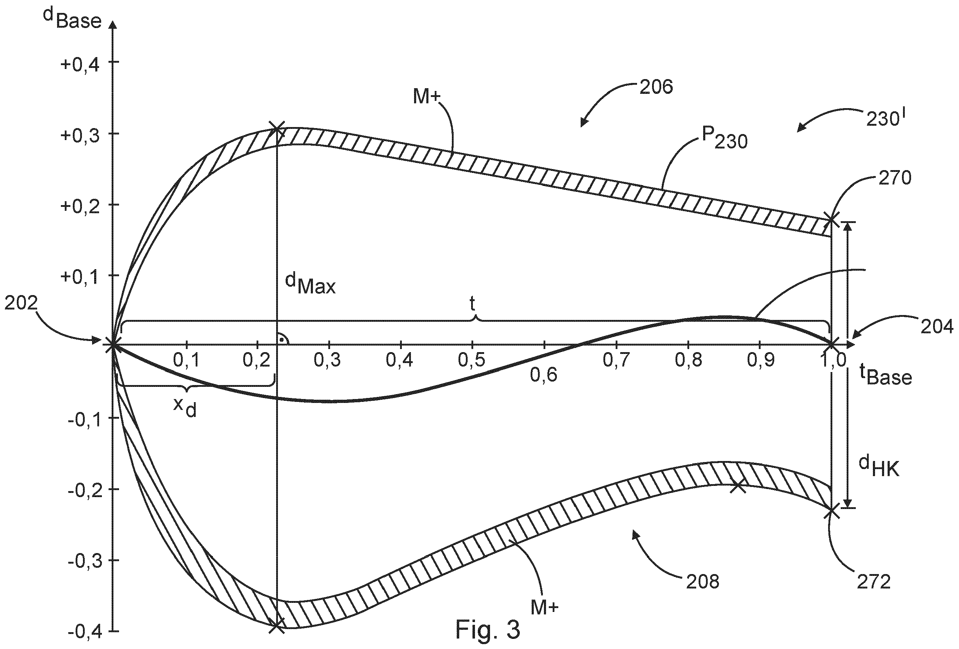

Das Rotorblatt 200 weist ferner insbesondere an der Trennstelle 230 ein aerodynamisch offenes Profil (P) auf, wie bspw. in Fig. 3 gezeigt ist.

Fig. 3 zeigt schematisch und exemplarisch ein Profil P₂₃₀ eines Rotorblattes, bspw. wie in Fig. 2 gezeigt, an einer Trennstelle 230 des Rotorblattes in einer Ansicht 230`, insbesondere im Querschnitt.

Fig. 3 ist also insbesondere das Profil P₂₃₀ des Rotorblattes 200 an der Trennstelle 230 zu entnehmen.

Insbesondere im Bereich der Trennstelle 230 ist das Profil des Rotorblattes 200 nicht geschlossen, in diesem Beispiel weist die Hinterkante eine endliche Dicke d_{HK} auf. Dies bedeutet insbesondere, dass ein Abströmpunkt 270 auf der Saugseite 206 und ein Abströmpunkt 272 auf der Druckseite 208 an der Hinterkante voneinander mit einem Abstand d_{HK} beabstandet sind.

Während in der Fig. 3 eine klassische "dicke Hinterkante" gezeigt ist, bei dem die Hinterkante quasi senkrecht auf der Protilfiete t steht und bei der eine scharfe Kante zu den jeweiligen Abströmpunkten auf Druckseite 208 und Saugseite 206 vorgesehen ist, so ist ein aerodynamisch offenes Profil der vorliegenden Erfindung nicht darauf beschränkt.

Die Form der Hinterkante kann auch gekrümmt sein und ist nicht auf eine gerade Linie beschränkt. Auch kann die Richtung der Hinterkante von einer zu der Profiltiefe senkrechten Richtung abweichen. Schließlich ist auch kein spitzer Übergang zwischen der Hinterkante und der Druckseite 208 bzw. der Saugseite 206 erforderlich. Beispielsweise kann auch ein kontinuierlicher oder abgerundeter Übergang vorgesehen sein. Die Dicke der Hinterkante d_{HK} wird dann als der Abstand zwischen den jeweiligen lokalen Krümmungsmaxima auf der Druckseite 208 bzw. der Saugseite 206 bestimmt, die dann die jeweiligen Abströmpunkte 270, 272 definieren.

Für ein besseres Verständnis und insbesondere um die hierin beschriebenen Relationen zu veranschaulichen, ist die Ansicht 230` um ein kartesisches Koordinatensystem ergänzt. Auf der Abszisse des Koordinatensystems ist dabei die lokale Profiltiefe t_{base} prozentual abgetragen. Auf der Ordinate des Koordinatensystems ist ferner die lokale Profildicke d_{base} prozentual abgetragen, insbesondere in Relation zur Profiltiefe.

Bevorzugt weisen sowohl das zweite Ende 214 der ersten Rotorblattkomponente 210 als auch das erste Ende 222 der zweiten Rotorblattkomponente 220 das Profil P₂₃₀ auf. Dies ermöglicht insbesondere einen Formschluss der beiden Rotorblattkomponenten 210, 220 an der Trennstelle 230 des Rotorblattes 200.

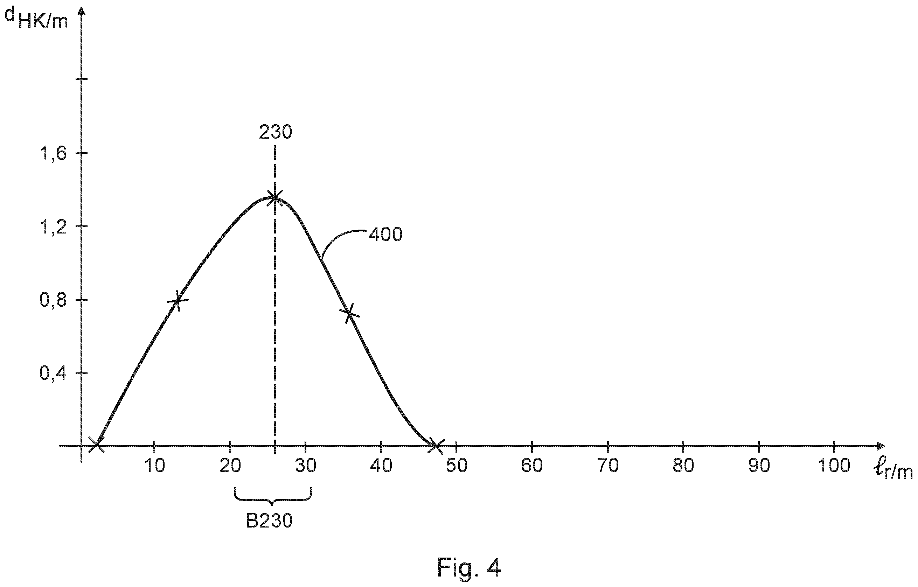

Das Profil P₂₃₀ ist aerodynamisch offen, d.h. die Oberseite 206 und die Unterseite 208 des Rotorblattes sind an der Hinterkante 204 um eine Dicke d_{HK} voneinander beabstandet, bspw. um 1,5m oder wie in Fig. 4 gezeigt.

Das Profil P₂₃₀ weist eine Profilsehne t (engl. chord) auf, die direkt zwischen Vorderkante 202 und Hinterkante 204 verläuft.

Das Profil P₂₃₀ weist ferner eine Profildicke d auf, dessen lokales Maximum dₘₐₓ bei ca. 22 Prozent der Profiltiefe liegt. Dies bedeutet insbesondere, dass das Rotorblatt bei ca. 22 Prozent Profiltiefe seine maximale Dicke aufweist. Der Abstand zwischen Vorderkante 202 und dem Punkt der maximalen Dicke dₘₐₓ des Profils P₂₃₀ wird auch als Dickenrücklage x_{d} bezeichnet. Das Verhältnis der Dickenrücklage x_{d} zur Profiltiefe t wird ferner auch als relative Dickenrücklage x_{d}' bezeichnet.

Das Rotorblatt 200 weist an der Trennstelle 230 bzw. im Bereich B₂₃₀ der Trennstelle 230 eine Materialaufdickung M+ auf, die auch als Preformaufdickung bezeichnet werden kann. Bevorzugt beträgt die Materialaufdickung M+ mehr als 0,2m und weniger als 1,0m, vorzugsweise zwischen 0,3m und 0,7m, insbesondere ca. 0,5m. Die Materialaufdickung M+ ist hierbei als insgesamte Strukturverdickung zu verstehen, die sich sowohl profilvergrö-ßernd nach außen, also als Konturaufdickung, aber auch nach innerhalb des Profils erstrecken kann.

Das Rotorblatt 200 weist an der Trennstelle 230 bzw. im Bereich B₂₃₀ der Trennstelle 230 ferner nur eine geringe Krümmung auf. Die geringe Krümmung ist durch die flachverlaufende Skelettlinie s verdeutlicht.

Zudem weist das Rotorblatt 200 an der Trennstelle 230 bzw. im Bereich B₂₃₀ der Trennstelle 230 einen sogenannten back swing auf, also eine negative Krümmung, die durch den negativen Verlauf der Skelettlinie verdeutlich ist. Die Skelettlinie s weist also wenigstens einen Vorzeichenwechsel auf, insbesondere in einem Bereich zwischen 40 Prozent und 70 Prozent der Länge Iᵣ des Rotorblattes.

Fig. 4 zeigt schematisch und exemplarisch einen Verlauf der Dicke d_{HK} der Hinterkante 204 über die Länge Iᵣ des Rotorblattes 200.

Die Hinterkante 204 des Rotorblattes wird bis in den Bereich B₂₃₀ der Trennstelle aufgezogen, bspw. bis 1,5m, und erreicht dort ihr Maximum, bspw. genau auf der Trennstelle. Anschließend verjüngt sich die Hinterkante zu 0m, bspw. bei 45m Blattlänge.

Dies bedeutet insbesondere, dass das Profil P des Rotorblattes bis 45m Blattlänge geöffnet ist und danach bis zur Blattspitze bei 100m geschlossen ist. Das Profil P des Rotorblattes 200 ist also nur abschnittsweise offen und insbesondere an der Trennstelle 230 offen.

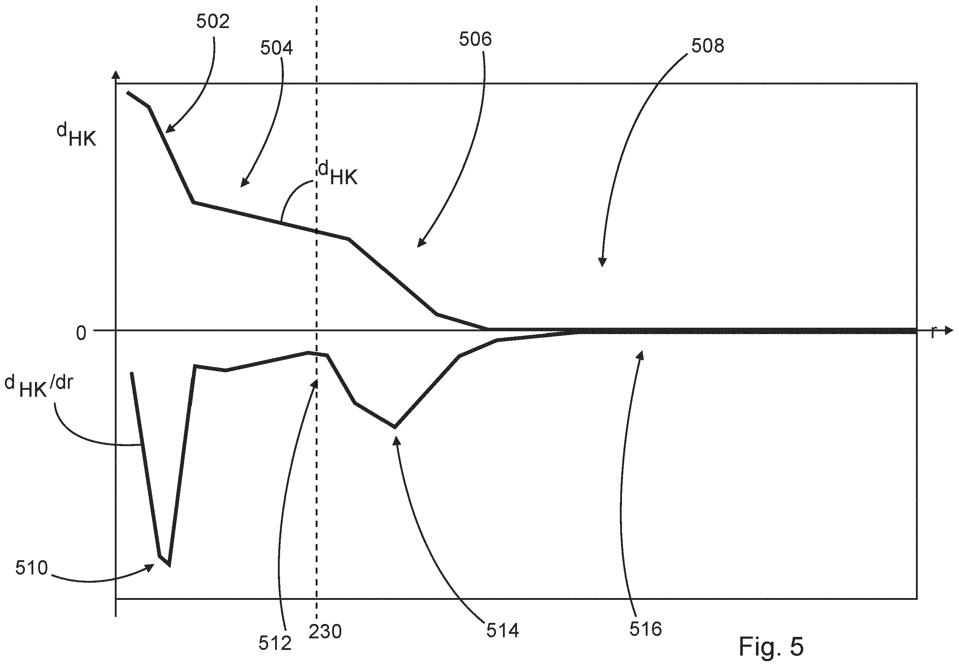

Fig. 5 zeigt schematisch und exemplarisch einen alternativen Verlauf der Dicke d_{HK} der Hinterkante 204 über die Länge Iᵣ des Rotorblattes 200 sowie die zugehörige Ableitung d_{HK}/dᵣ Im Unterschied zu dem Verlauf der Fig. 4 ist die Dicke d_{HK} monoton fallend ausgebildet, das Maximum ist also bereits an dem bzw. in Umgebung des Blattanschlusses ausgeführt.

Zunächst erfolgt in einem Bereich 502 eine vergleichsweise starke Abnahme der Dicke der Hinterkante, die sich in einem Bereich 504 abflacht und in einem Bereich 506 dann wieder stärker abnimmt. In einem Bereich 508 ist die Dicke der Hinterkante Null, das aerodynamische Profil ist dort also geschlossen.

Die erfindungsgemäße Lösung sieht man nun besonders gut im unteren bzw. negativen Teil der Fig. 5, in dem die Ableitung d_{HK}/dᵣ gezeigt ist. Die Ableitung bzw. Änderung der Dicke der Hinterkante d_{HK}/dᵣ ist über die gesamte Rotorblattlänge negativ, das heißt, dass die Dicke der Hinterkante monoton fallend ist. Die Trennstelle 230 ist in dem Bereich 512 ausgeführt, in dem die Änderung der Dicke der Hinterkante d_{HK}/dᵣ ein lokales Maximum aufweist. Verglichen hiermit verringert sich die Dicke der Hinterkante in den beiden umliegenden Bereichen 510 und 514 stärker, das heißt, dass die Änderung der Dicke der Hinterkante d_{HK}/dᵣ in den Bereichen 510 und 514 betragsmäßig größer ist. Da die Dicke der Hinterkante in dem Bereich 508 Null ist, ist die Änderung der Dicke der Hinterkante d_{HK}/dᵣ in dem entsprechenden Bereich 516 ebenfalls Null.

### Bezugszeichenliste

- 100: Windenergieanlage
- 102: Turm
- 104: Gondel, insbesondere der Windenergieanlage
- 106: aerodynamischer Rotor, insbesondere der Windenergieanlage
- 110: Nabe, insbesondere der Windenergieanlage
- 200: Rotorblatt, insbesondere der Windenergieanlage
- 200A: Rotorblatt, insbesondere in einer ersten Ansicht
- 200B: Rotorblatt, insbesondere in einer zweiten Ansicht
- 200C: Rotorblatt, insbesondere in einer dritten Ansicht
- 202: Vorderkante, insbesondere des Rotorblattes
- 204: Hinterkante, insbesondere des Rotorblattes
- 206: Oberseite, insbesondere des Rotorblattes
- 208: Unterseite, insbesondere des Rotorblattes
- 210: erste Rotorblattkomponente
- 212: erstes Ende, insbesondere der ersten Rotorblattkomponente
- 214: zweites Ende, insbesondere der ersten Rotorblattkomponente
- 220: zweite Rotorblattkomponente
- 222: erste Ende, insbesondere der zweiten Rotorblattkomponente
- 224: zweites Ende, insbesondere der zweiten Rotorblattkomponente
- 230: Trennstelle des Rotorblattes
- 230': Ansicht der Trennstelle
- 240: Serration
- 250: Gurney-Flap
- 400: Verlauf der Dicke der Hinterkante über die Länge des Rotorblattes
- B230: Bereich der Trennstelle
- d: Profildicke
- d_{base}: lokale Profildicke
- dₘₐₓ: maximale lokale Profildicke
- d_{HK}: Dicke der Hinterkante
- Iᵣ: Länge des Rotorblattes
- I1: Länge der ersten Rotorblattkomponente
- I2: Länge der zweiten Rotorblattkomponente
- M+: Materialaufdickung, insbesondere an der Trennstelle
- P: Profil des Rotorblattes
- P₂₃₀: Profil des Rotorblattes an der Trennstelle
- s: Skelettlinie
- t: Profiltiefe des Rotorblattes
- t_{base}: (lokale) prozentuale Profiltiefe
- x_{d}: Dickenrücklage
- x_{d}': relative Dickenrücklage

## Patentansprüche

1. Rotorblatt (200) einer Windenergieanlage (100), wenigstens umfassend
- eine erste Rotorblattkomponente (210) mit:
- einem ersten Ende (212) zum Anordnen an der Windenergieanlage (100), und
- einem zweiten Ende (214) zum Verbinden mit einer zweiten Rotorblattkomponente (220);
- eine zweite Rotorblattkomponente (220) mit:
- einem ersten Ende (222) zum Anordnen an der ersten Rotorblattkomponente (210), und
- einem zweiten Ende (224) wobei
- die erste Rotorblattkomponente (210) mit der zweiten Rotorblattkomponente (220) an einer Trennstelle (230) zu dem Rotorblatt (210, 220) verbindbar ist, wobei
- das Rotorblatt (210, 220) an der Trennstelle (230) ein aerodynamisch offenes Profil (P) aufweist, wobei
- das Rotorblatt in Rotorblattlängsrichtung einen Verlauf unterschiedlicher Profile mit jeweils einer Vorderkante, einer Hinterkante und die Vorder- und Hinterkante verbindenden druckseitigen und saugseitigen Strömungsflächen aufweist, und
- die Hinterkante in wenigstens einem Abschnitt in Rotorblattlängsrichtung, in dem die Trennstelle liegt,
- als dicke Hinterkante ausgeführt ist oder strömungsbeeinflussende Anbauteile wie Gurney-Flaps aufweist oder als C-förmiges bzw. hohles Profil ausgebildet ist und damit
- das aerodynamisch offene Profil (P) ausbildet, wobei eine direkte Verbindung zwischen Vorderkante und Hinterkante als Profilsehne und deren Länge als Profiltiefe bezeichnet wird,
ein größter Abstand zwischen druckseitiger und saugseitiger Profilfläche senkrecht auf der Profiltiefe als Profildicke bezeichnet wird und
ein Verhältnis aus Profildicke zu Profiltiefe als relative Dicke bezeichnet wird, wobei ein Verlauf der relativen Dicke über die Rotorblattlänge als Dickenverlauf bezeichnet wird und das Rotorblatt **dadurch gekennzeichnet ist, dass** eine Änderung des Dickenverlaufs im Bereich der Trennstelle (300) ein lokales Maximum aufweist.

2. Rotorblatt (200) nach Anspruch 1, wobei die dicke Hinterkante durch an der Hinterkante beabstandete druckseitige und saugseitige Strömungsflächen ausgebildet ist, wobei der Abstand zwischen druckseitiger und saugseitiger Strömungsfläche an der Hinterkante als Dicke (d_{HK}) der Hinterkante bezeichnet wird.

3. Rotorblatt (200) nach Anspruch 2, wobei eine Änderung der Dicke der Hinterkante (d_{HK}/dr) wenigstens ein lokales Maximum aufweist, und:
- das lokale Maximum in einem Bereich um die Trennstelle liegt, wobei der Bereich um die Trennstelle zwischen 15 Prozent und 40 Prozent der Länge des Rotorblattes liegt und/oder der Bereich kleiner als 10 Prozent der Länge des Rotorblattes ist.

4. Rotorblatt (200) nach Anspruch 3, wobei die Dicke der Hinterkante (d_{HK}) in Rotorblattlängsrichtung monoton fallend verläuft.

5. Rotorblatt (200) nach einem der vorstehenden Ansprüche, wobei die Druckseite, an der Trennstelle (300) im Bereich der Hinterkante konkav verläuft.

6. Rotorblatt (200) nach Anspruch 5, wobei eine Krümmung der Druckseite an der Trennstelle (300) im Bereich der Hinterkante betragsmäßig größer als die Krümmung der Saugseite an der Trennstelle (300) im Bereich der Hinterkante ist.

7. Rotorblatt (200) nach Anspruch 6, wobei die Änderung des Dickenverlaufs als Ableitung des Dickenverlaufs nach der Richtung der Rotorblattlänge definiert ist.

8. Rotorblatt (200) nach Anspruch 6 oder 7, wobei eine Krümmung des Dickenverlaufs im Bereich der Trennstelle (300) die Richtung ändert, wobei die Krümmung insbesondere als zweite Ableitung des Dickenverlaufs nach der Richtung der Rotorblattlänge definiert ist und sich die Richtung bei einem Vorzeichenwechsel ändert.

9. Rotorblatt (200) nach wenigstens einem der vorstehenden Ansprüche, wobei die relative Dicke an der Trennstelle (300) zwischen 40% und 80% beträgt.

10. Rotorblatt (200) nach wenigstens einem der vorstehenden Ansprüche, wobei
eine relative Position der maximalen Profildicke, bezogen auf die Profilsehne, als Dickenrücklage bezeichnet wird, wobei die Dickenrücklage an der Trennstelle (300) kleiner als 30% beträgt.

11. Rotorblatt (200) nach wenigstens einem der vorstehenden Ansprüche, wobei
eine Verbindung der Innenkreise des Profils als Skelettlinie bezeichnet wird, wobei eine Wölbung als Abstand der Skelettlinie von der und senkrecht zu der Profilsehne definiert wird, wobei
ein Verlauf der Wölbung entlang der Profiltiefe ein Maximum in den hinteren 50%, gemessen ab der Vorderkante, aufweist.

12. Rotorblatt (200) nach Anspruch 11, wobei sich ein Vorzeichen der Wölbung in den vorderen 70% der Profiltiefe, gemessen ab der Vorderkante, insbesondere in einem Bereich zwischen 40% und 70% der Profiltiefe, ändert.

13. Rotorblatt (200) nach Anspruch 11 oder 12, wobei ein Wert der Wölbung an der Trennstelle an jeder Position in Profiltiefenrichtung zwischen plus und minus 10%, insbesondere zwischen plus und minus 7%, bezogen auf die Profiltiefe an der Trennstelle beträgt.

14. Rotorblatt (200) einer Windenergieanlage (100) nach wenigstens einem der vorstehenden Ansprüche, wobei
- das Rotorblatt eine Länge (Ir) von wenigstens 70m, bevorzugt wenigstens 80m, weiter bevorzugt wenigstens 100m, aufweist.

15. Rotorblatt (200) nach Anspruch 14, wobei die maximale Profiltiefe des Rotorblattes (200) höchstens 6,5% der Länge des Rotorblattes (200) beträgt.

16. Rotorblatt (200) einer Windenergieanlage (100) nach wenigstens einem der vorstehenden Ansprüche, wobei
- das Rotorblatt (200) wenigstens einen Vortex-Generator und/oder einen Gurney-Flap und/oder eine Schnitt-Platte und/oder einen Grenzschichtzaun aufweist, insbesondere am oder auf dem ersten und zweiten länglichen Körper.

17. Rotorblatt (200) einer Windenergieanlage (100) nach wenigstens einem der vorstehenden Ansprüche, wobei
- die erste Rotorblattkomponente eine Länge (I₁) aufweist und die zweite Rotorblattkomponente eine Länge (I₂) aufweist, wobei die Länge (I₁) der ersten Rotorblattkomponente kürzer ist als die Länge (I₂) der zweiten Rotorblattkomponente, insbesondere so, dass die Trennstelle (230) in einem Bereich des Rotorblattes zwischen 20 Prozent und 35 Prozent der Länge des Rotorblattes angeordnet ist.

18. Windenergieanlage (100), wenigstens umfassend ein Rotorblatt (200) nach einem der Ansprüche 1 bis 17.

19. Windpark mit mehreren Windenergieanlagen (100) nach Anspruch 18.

## Claims

1. A rotor blade (200) of a wind power installation (100), at least comprising
- a first rotor blade component (210) having:
- a first end (212) for arranging on the wind power installation (100), and
- a second end (214) for connecting to a second rotor blade component (220);
- a second rotor blade component (220) having:
- a first end (222) for arranging on the first rotor blade component (210), and
- a second end (224) wherein
- the first rotor blade component (210) can be connected to the second rotor blade component (220) at a separating point (230) to the rotor blade (210, 220), wherein
- the rotor blade (210, 220) has an aerodynamically open profile (P) at the separating point (230), wherein
- the rotor blade has a progression with different profiles in the rotor blade longitudinal direction, each profile having a leading edge, a trailing edge, and flow surfaces on the pressure side and the suction side connecting the leading edge and trailing edge, and
- the trailing edge in at least one portion in the rotor blade longitudinal direction, in which the separating point lies,
- is designed as a thick trailing edge or has flow-influencing components such as Gurney flaps or is designed as a C-shaped or hollow profile in order to provide said aerodynamically open profile, wherein
- a direct connection between the leading edge and the trailing edge is referred to as the chord and the length thereof as the profile depth,
a greater distance between the profile surface on the pressure side and the suction side perpendicularly to the profile depth is referred to as the profile thickness and
a ratio of profile thickness to profile depth is referred to as the relative thickness, wherein
a progression of the relative thickness over the rotor blade length is referred to as the thickness progression and
the rotor blade is **characterized in that** a change in the thickness progression in the region of the separating point (300) has a local maximum.

2. The rotor blade (200) as claimed in claim 1, wherein the thick trailing edge is formed by flow surfaces on the pressure side and the suction side spaced apart on the trailing edge, wherein the space between the flow surface on the pressure side and on the suction side on the trailing edge is referred to as the thickness (d_{HK}) of the trailing edge.

3. The rotor blade (200) as claimed in claim 2, wherein a change in the thickness of the trailing edge (d_{HK}/dr) has at least one local maximum, and:
- the local maximum lies in a region about the separating point, wherein the region about the separating point lies between 15 percent and 40 percent of the length of the rotor blade and/or the region is smaller than 10 percent of the length of the rotor blade.

4. The rotor blade (200) as claimed in claim 3, wherein the thickness of the trailing edge (d_{HK}) has a monotonically decreasing progression in the longitudinal direction of the rotor blade.

5. The rotor blade (200) as claimed in one of the preceding claims, wherein the pressure side has a concave progression at the separating point (300) in the region of the trailing edge.

6. The rotor blade (200) as claimed in claim 5, wherein a camber of the pressure side at the separating point (300) in the region of the trailing edge is greater in terms of amount than the camber of the suction side at the separating point (300) in the region of the trailing edge.

7. The rotor blade (200) as claimed in claim 6, wherein the change in the thickness progression is defined as the deviation of the thickness progression following the direction of the rotor blade length.

8. The rotor blade (200) as claimed in claim 6 or 7, wherein a camber of the thickness progression changes direction in the region of the separating point (300), wherein the camber is particularly defined as the second deviation of the thickness profile following the direction of the rotor blade length and the direction changes when the algebraic sign changes.

9. The rotor blade (200) as claimed in at least one of the preceding claims, wherein the relative thickness at the separating point (300) is between 40% and 80%.

10. The rotor blade (200) as claimed in at least one of the preceding claims, wherein
a relative position of the maximum profile thickness, relative to the chord, is referred to as the thickness reserve, wherein the thickness reserve at the separating point (300) is smaller than 30%.

11. The rotor blade (200) as claimed in at least one of the preceding claims, wherein
a connection of the incircles of the profile is referred to as the camber line, wherein a curvature is defined as the distance of the camber line from, and perpendicularly to, the chord, wherein
a progression of the curvature along the profile depth displays a maximum in the rear 50%, measured from the leading edge.

12. The rotor blade (200) as claimed in claim 11, wherein an algebraic sign of the curvature changes in the front 70% of the profile depth, measured from the leading edge, in particular in a region between 40% and 70% of the profile depth.

13. The rotor blade (200) as claimed in claim 11 or 12, wherein a value of the curvature at the separating point at each position in the profile depth direction is preferably between plus and minus 10%, in particular between plus and minus 7%, relative to the profile depth at the separating point.

14. The rotor blade (200) of a wind power installation (100) as claimed in at least one of the preceding claims, wherein
- the rotor blade has a length (Ir) of at least 70m, preferably at least 80m, more preferably at least 100m.

15. The rotor blade (200) as claimed in claim 14, wherein the maximum profile depth of the rotor blade (200) is at most 6.5% of the length of the rotor blade (200).

16. The rotor blade (200) of a wind power installation (100) as claimed in at least one of the preceding claims, wherein
- the rotor blade (200) has at least one vortex generator and/or a Gurney flap and/or a splitter plate and/or a boundary layer fence, in particular at, or on, the first and second elongate body.

17. The rotor blade (200) of a wind power installation (100) as claimed in at least one of the preceding claims, wherein
- the first rotor blade component has a length (I₁) and the second rotor blade component has a length (I₂), wherein the length (I₁) of the first rotor blade component is shorter than the length (I₂) of the second rotor blade component, in particular such that the separating point (230) is arranged in a region of the rotor blade of between 20 percent and 35 percent of the length of the rotor blade.

18. A wind power installation (100) at least comprising a rotor blade (200) as claimed in one of claims 1 to 17.

19. A wind park with multiple wind power installations (100) as claimed in claim 18.

## Revendications

1. Pale de rotor (200) d'une éolienne (100), comprenant au moins
- un premier composant de pale de rotor (210) avec :
-- une première extrémité (212) destinée à être disposée sur l'éolienne (100), et
-- une seconde extrémité (214) destinée à être reliée à un second composant de pale de rotor (220) ;
- un second composant de pale de rotor (220) avec :
-- une première extrémité (222) destinée à être disposée sur le premier composant de pale de rotor (210), et
-- une seconde extrémité (224), dans laquelle
- le premier composant de pale de rotor (210) peut être relié au second composant de pale de rotor (220) sur un point de séparation (230) pour former la pale de rotor (210, 220), dans laquelle
-- la pale de rotor (210, 220) présente, sur le point de séparation (230), un profilé (P) ouvert de manière aérodynamique, dans laquelle
- la pale de rotor présente, dans la direction longitudinale de pale de rotor, un profil de différents profilés avec chacun un bord d'attaque, un bord de fuite et des surfaces d'écoulement côté pression et côté aspiration reliant le bord d'attaque et le bord de fuite, et
-- le bord de fuite
--- est exécuté en tant qu'un bord de fuite épais ou présente des composants rapportés influençant l'écoulement comme des volets Gurney ou est réalisé en tant qu'un profilé en forme de C ou creux
dans au moins une section dans la direction longitudinale de pale de rotor, dans laquelle se situe le point de séparation, et réalise ainsi
-- le profilé (P) ouvert de manière aérodynamique, dans laquelle
une liaison directe entre le bord d'attaque et le bord de fuite est désignée par corde de profilé et sa longueur par profondeur de profilé,
et une distance plus grande entre la surface de profilé côté pression et la surface de profilé côté aspiration de manière perpendiculaire sur la profondeur de profilé est désignée en tant qu'épaisseur de profilé, et
un rapport entre l'épaisseur de profilé et la profondeur de profilé est désigné en tant qu'épaisseur relative, dans laquelle
un profil de l'épaisseur relative sur la longueur de pale de rotor est désigné en tant que profil d'épaisseur, **caractérisée en ce qu'**une modification du profil d'épaisseur présente, dans la zone du point de séparation (300), un maximum local.

2. Pale de rotor (200) selon la revendication 1, dans laquelle le bord de fuite épais est réalisé par des surfaces d'écoulement côté pression et côté aspiration tenues à distance sur le bord de fuite, dans laquelle la distance entre une surface d'écoulement côté pression et une surface d'écoulement côté aspiration sur le bord de fuite est désignée en tant qu'épaisseur (d_{HK}) du bord de fuite.

3. Pale de rotor (200) selon la revendication 2, dans laquelle une modification de l'épaisseur du bord de fuite (d_{HK}/dr) présente au moins un maximum local, et :
- le maximum local se situe dans une zone autour du point de séparation, dans laquelle la zone autour du point de séparation se situe entre 15 % et 40 % de la longueur de la pale de rotor et/ou la zone est inférieure à 10 % de la longueur de la pale de rotor.

4. Pale de rotor (200) selon la revendication 3, dans laquelle l'épaisseur du bord de fuite (d_{HK}) s'étend de manière tombante et monotone dans la direction longitudinale de pale de rotor.

5. Pale de rotor (200) selon l'une quelconque des revendications précédentes, dans laquelle le côté de pression s'étend de manière concave dans la zone du bord de fuite sur le point de séparation (300).

6. Pale de rotor (200) selon la revendication 5, dans laquelle une incurvation du côté de pression sur le point de séparation (300) dans la zone du bord de fuite est, en termes de valeur, plus grande que l'incurvation du côté d'aspiration sur le point de séparation (300) dans la zone du bord de fuite.

7. Pale de rotor (200) selon la revendication 6, dans laquelle la modification du profil d'épaisseur est définie en tant que déviation du profil d'épaisseur vers la direction de la longueur de pale de rotor.

8. Pale de rotor (200) selon la revendication 6 ou 7, dans laquelle une incurvation du profil d'épaisseur modifie la direction dans la zone du point de séparation (300), dans laquelle l'incurvation est définie en particulier en tant que deuxième déviation du profil d'épaisseur vers la direction de la longueur de pale de rotor et la direction varie lors d'un changement de signe.

9. Pale de rotor (200) selon au moins l'une quelconque des revendications précédentes, dans laquelle l'épaisseur relative est comprise entre 40 % et 80 % sur le point de séparation (300).

10. Pale de rotor (200) selon au moins l'une quelconque des revendications précédentes, dans laquelle
une position relative de l'épaisseur de profilé maximale est désignée en tant que retrait d'épaisseur par rapport à la corde de profilé, dans laquelle le retrait d'épaisseur est inférieur à 30 % sur le point de séparation (300).

11. Pale de rotor (200) selon au moins l'une quelconque des revendications précédentes, dans laquelle
une liaison des milieux intérieurs du profilé est désignée en tant que ligne de squelette, dans laquelle un bombement est défini en tant que distance de la ligne de squelette par rapport à la corde de profilé et de manière perpendiculaire à la corde de profilé, dans laquelle
un profil du bombement présente, le long de la profondeur de profilé, un maximum dans les 50 % arrière, mesurés à partir du bord d'attaque.

12. Pale de rotor (200) selon la revendication 11, dans laquelle un signe du bombement varie dans les 70 % avant de la profondeur de profilé, mesuré à partir du bord d'attaque, en particulier dans une plage entre 40 % et 70 % de la profondeur de profilé.

13. Pale de rotor (200) selon la revendication 11 ou 12, dans laquelle une valeur du bombement sur le point de séparation sur chaque position dans la direction de profondeur de profilé est comprise entre plus et moins 10 %, en particulier entre plus et moins 7 % par rapport à la profondeur de profilé sur le point de séparation.

14. Pale de rotor (200) d'une éolienne (100) selon au moins l'une quelconque des revendications précédentes, dans laquelle
- la pale de rotor présente une longueur (Ir) d'au moins 70 m, de manière préférée d'au moins 80 m, de manière davantage préférée d'au moins 100 m.

15. Pale de rotor (200) selon la revendication 14, dans laquelle la profondeur de profilé maximale de la pale de rotor (200) est au maximum de 6,5 % de la longueur de la pale de rotor (200).

16. Pale de rotor (200) d'une éolienne (100) selon au moins l'une quelconque des revendications précédentes, dans laquelle
- la pale de rotor (200) présente au moins un générateur de tourbillons et/ou un volet Gurney et/ou une plaque de coupe et/ou une barrière de couche limite, en particulier contre ou sur le premier et le deuxième corps longitudinal.

17. Pale de rotor (200) d'une éolienne (100) selon au moins l'une quelconque des revendications précédentes, dans laquelle
- le premier composant de pale de rotor présente une longueur (l₁) et le second composant de pale de rotor présente une longueur (l₂), dans laquelle la longueur (l₁) du premier composant de pale de rotor est plus courte que la longueur (l₂) du second composant de pale de rotor, en particulier de telle sorte que le point de séparation (230) est disposé dans une zone de la pale de rotor entre 20 % et 35 % de la longueur de la pale de rotor.

18. Eolienne (100) comprenant au moins une pale de rotor (200) selon l'une quelconque des revendications 1 à 17.

19. Parc éolien avec plusieurs éoliennes (100) selon la revendication 18.
